Europäisches Patentamt

European Patent Office

Office européen des brevets

(11) Publication number: **0 625 845 A1**

# EUROPEAN PATENT APPLICATION

(21) Application number: 94107651.5

(22) Date of filing: 17.05.94

(51) Int. Cl.5: **H04N 1/44**, H04L 9/06

(30) Priority: 17.05.93 JP 139401/93
17.05.93 JP 139402/93

(43) Date of publication of application:
**23.11.94 Bulletin 94/47**

(84) Designated Contracting States:
**DE FR GB IT**

(71) Applicant: **MITA INDUSTRIAL CO., LTD.**
**2-28, 1-chome, Tamatsukuri**
**Chuo-ku**
**Osaka 540 (JP)**

(72) Inventor: **Shibata, Koichi, c/o Mita Industrial**

Co., Ltd.
2-28 Tamatsukuri, 1-chome, Chuo-ku
Osaka, 540 (JP)
Inventor: Oyama, Masakazu, c/o Mita
Industrial Co., Ltd.
2-28 Tamatsukuri, 1-chome, Chuo-ku
Osaka, 540 (JP)

(74) Representative: **Sajda, Wolf E., Dipl.-Phys. et al**
**MEISSNER, BOLTE & PARTNER**
**Postfach 86 06 24**
**D-81633 München (DE)**

(54) Ciphering device and method in facsimile.

(57) A ciphering device in a facsimile apparatus is provided in which a signal to be ciphered comprising a coded signal and a control code added thereto is ciphered in units of $n$ bits. The device comprises means for judging whether or not the total number of bits composing the signal to be ciphered is a multiple of $n$, and means for adding random data behind the signal to be ciphered so that the total number of bits composing the signal to be ciphered is a multiple of $n$ and ciphering a signal comprising the signal to be ciphered and the random data added thereto in units of $n$ bits when the total number of bits is not a multiple of $n$.

*FIG.3*

## BACKGROUND OF THE INVENTION

### Field of the Invention

The present invention relates to a ciphering device and a ciphering method in a facsimile.

### Description of the Prior Art

In a facsimile, an image signal read is coded by MH (modified Huffman) coding, MR (Modified READ) coding or the like and then, is transmitted. In the facsimile, it is considered that a coded signal is further ciphered and transmitted so that the original image signal is not deciphered from the transmitted signal. Ciphering processing is generally performed in units of n bits, whereby an n-bit signal is converted into an n-bit ciphered signal.

In the facsimile employing MH coding, MR coding or the like, the following control codes are added to the coded signal. Specifically, an end-of-line (EOL) code is added behind the coded signal on each scanning line. The EOL code is 12-bit data "000000000001".

Furthermore, if the signal transmission time per scanning line is smaller than the minimum time determined by CCITT, a required number of "0" bits are added just ahead of the EOL code. A code added just ahead of the EOL code shall be referred to as a FILL code.

Additionally, a return-to-control (RTC) code is added behind one telegraphic message before transmission. This RTC code is a sequence of six EOL codes "000000000001". That is, a predetermined pattern of 12 x 6 = 72 bits is added behind one telegraphic message.

Suppose a signal obtained by adding the control code comprising the EOL code, the FILL code and the RTC code to the coded signal is ciphered in units of $n$ bits.

If the number of bits composing a signal to be ciphered (a plaintext) comprising the coded signal and the control code added thereto is not a multiple of $n$, it is considered that "0s" whose number corresponds to the number of bits which is short of a multiple of n is added.

If the number of bits which is short of a multiple of $n$ is increased, however, the contents of the last n bits of the signal to be ciphered are estimated. For example, if $n = 100$ and the number of bits which is short of a multiple of n is not less than 38 (= 100 - 72), the last $n$ bits of the signal to be ciphered is constituted by the EOL code and a plurality of "0" bits, whereby the contents of the last $n$ bits of the signal to be ciphered are estimated. Consequently, a cipher rule is easily found on the basis of the last n bits of the signal to be ciphered and a corresponding ciphertext, so that the ciphertext is easily deciphered.

On the other hand, merely by ciphering the signal to be ciphered comprising the coded signal and the control code when n is smaller than the number of bits (72 bits) composing the RTC code and the total number of bits composing the signal to be ciphered is a multiple of $n$, a signal before the ciphering corresponding to the last $n$ bits of a ciphertext obtained by the ciphering is simply estimated. That is, a cipher rule is easily found on the basis of the last $n$ bits of the signal to be ciphered and a corresponding ciphertext, so that the ciphertext is easily deciphered.

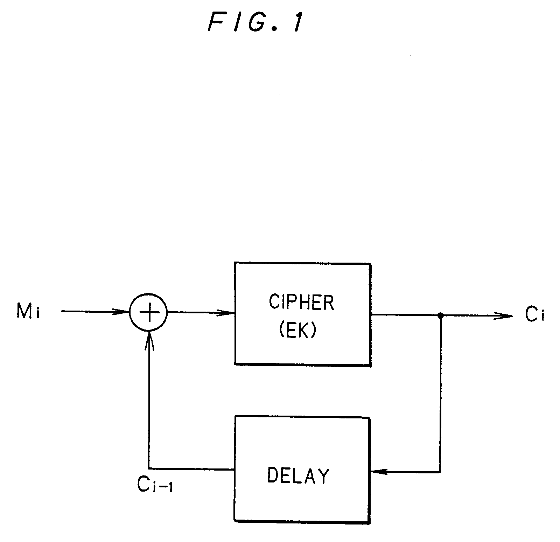

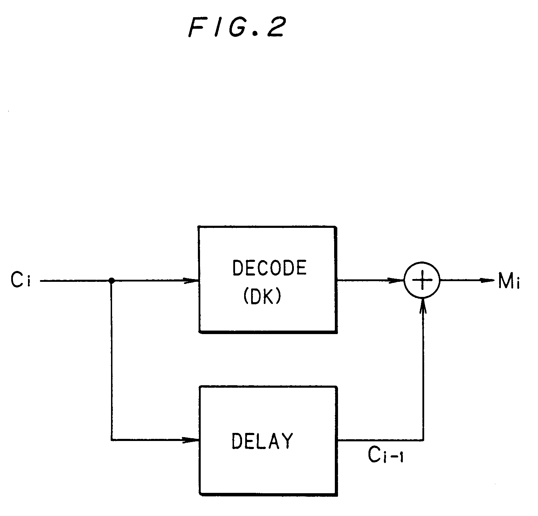

Examples of the cipher system includes a cipher block chaining system (abbreviated as a CBC mode). Fig. 1 shows the general construction of a CBC mode ciphering device, and Fig. 2 shows the construction of a CBC mode deciphering device.

The CBC mode ciphering device ciphers a plaintext in blocks of a predetermined number of bits, for example, in blocks of 64 bits to output a ciphertext, and further inputs for the subsequent ciphering the exclusive OR of the outputted ciphertext and a plaintext in the succeeding block.

If a plaintext is taken as Mi and a ciphertext is taken as Ci, ciphering using a cryptographic key $K$ is taken as Ek and deciphering using the cryptographic key $K$ is taken as Dk, CBC mode ciphering is represented by the following equations (1) and (2) , and CBC mode deciphering is represented by the following equations (3) and (4):

$$C_1 = Ek (M_1 \oplus IV) \quad (1)$$

$$C_i = Ek (M_i \oplus C_{i-1}) (i = 2, 3, ...) \quad (2)$$

$$M_1 = Dk (C_1) \oplus IV \quad (3)$$

$$M_i = Dk (C_i) \oplus C_{i-1} (i = 2, 3, ...) \quad (4)$$

In the foregoing equations (1) to (4), a sign $\oplus$ represents exclusive OR, and IV represents an initial value which is used in the case of the first ciphering and the first deciphering. The same value is used as IV in the ciphering device and the deciphering device. If the value of IV is changed, different ciphertexts are produced from the same plaintext.

If cipher communication is established according to the CBC mode, it is desirable that an initial value IV is periodically changed so as to make it difficult for a third party to decipher a ciphertext. In a facsimile on the receiving side, however, an initial value IV used in a facsimile on the transmission side must be grasped so as to decipher the received ciphertext, thereby to make it difficult to periodically change the initial value IV.

Examples of the cipher system include a secret key cipher system for performing ciphering processing using a secret key. In the secret key cipher system, ciphering processing is performed in accordance of a cipher rule for ciphering while referring to a predetermined cryptographic key. Simple examples of the cipher rule include such a rule that if plaintext data to be ciphered is taken as x, ciphertext data is taken as y, and cryptographic key data (key data) is taken as K, y is a function of (x + K), i.e., {y = F (x + K)}.

If cipher communication is established according to the secret key cipher system, it is desirable that the value of key data is changed for each communication so as to make it difficult for a third party to decipher a ciphertext. In a facsimile on the receiving side, however, key data used in a facsimile on the transmission side must be grasped so as to decipher the received ciphertext, thereby to make it difficult to frequently change the key data.

## SUMMARY OF THE INVENTION

A first object of the present invention is to provide a ciphering device and a ciphering method in a facsimile in which a ciphertext is not easily deciphered.

A second object of the present invention is to provide a ciphering device and a ciphering method in a facsimile in which an initial value used in a cipher block chaining system can be easily changed so that a ciphertext is not easily deciphered by a third party.

A third object of the present invention is to provide a ciphering device and a ciphering method in a facsimile in which a cryptographic key used in a secret key cipher system can be easily changed so that a ciphertext is not easily deciphered by a third party.

In a ciphering device in a facsimile in which a signal to be ciphered comprising a coded signal and a control code added thereto is ciphered in units of n bits, a first ciphering device in a facsimile according to the present invention is characterized by comprising means for judging whether or not the total number of bits composing the signal to be ciphered is a multiple of n, and means for adding random data behind the signal to be ciphered so that the total number of bits composing the signal to be ciphered is a multiple of n and ciphering a signal comprising the signal to be ciphered and the random data added thereto in units of n bits when the total number of bits is not a multiple of n.

In a ciphering method in a facsimile in which a signal to be ciphered comprising a coded signal and a control code added thereto is ciphered in units of n bits, a first ciphering method in a facsimile according to the present invention is characterized by adding random data behind the signal to be ciphered so that the total number of bits composing the signal to be ciphered is a multiple of n and ciphering a signal comprising the signal to be ciphered and the random data added thereto in units of n bits when the total number of bits is not a multiple of n.

The above described control code comprises an EOL code added behind the coded signal on each scanning line, a FILL code added just ahead of the EOL code if the signal transmission time per scanning line is smaller than predetermined time, and an RTC code added behind one telegraphic message. The above described random data is produced on the basis of, for example, date and time data.

In the above described first ciphering device or ciphering method in a facsimile, the random data is added behind the signal to be ciphered so that the total number of bits composing the signal to be ciphered is a multiple of n and the signal comprising the signal to be ciphered and the random data added thereto is ciphered in units of n bits when the total number of bits is not a multiple of n. Therefore, a ciphertext is not easily deciphered.

In a ciphering device in a facsimile in which a signal to be ciphered comprising a coded signal and a control code added thereto is ciphered in units of n bits, a second coding device in a facsimile according to the present invention is characterized by comprising means for judging whether or not the total number of bits composing the signal to be ciphered is a multiple of n, means for ciphering the signal to be ciphered in units of n bits to produce a ciphertext when the total number of bits composing the signal to be ciphered is a multiple of n, and means for adding random data to the ciphertext to produce data to be transmitted.

In a ciphering method in a facsimile in which a signal to be ciphered comprising a coded signal and a control code added thereto is ciphered in units of n bits, a second ciphering method in a facsimile according to the present invention is characterized by ciphering the signal to be ciphered in units of n bits to produce a ciphertext when the total number of bits composing the signal to be ciphered is a multiple of n, and adding random data to the ciphertext to produce data to be transmitted.

In a ciphering device in a facsimile in which a signal to be ciphered comprising a coded signal and a control code added thereto is ciphered in units of n bits, a third ciphering device in a facsimile according to the present invention is characterized by comprising means for judging whether or not the total number of bits composing the signal to be ciphered is a multiple of n, and means for adding random data behind the signal to be ciphered and ciphering a signal comprising the signal to be ciphered and the random data added thereto in units of $n$ bits when the total number of bits composing the signal to be ciphered is a multiple of $n$.

In a ciphering method in a facsimile in which a signal to be ciphered comprising a coded signal and a control code added thereto is ciphered in units of $n$ bits, a third ciphering method in a facsimile according to the present invention is characterized by adding random data behind the signal to be ciphered and ciphering a signal comprising the signal to be ciphered and the random data added thereto in units of $n$ bits when the total number of bits composing the signal to be ciphered is a multiple of $n$.

The above described control code comprises an EOL code added behind the coded signal on each scanning line, a FILL code added just ahead of the EOL code if the signal transmission time per scanning line is smaller than predetermined time, and an RTC code added behind one telegraphic message. The above described random data is produced on the basis of, for example, date and time data.

In the above described second ciphering device or ciphering method in a facsimile, the signal to be ciphered comprising the coded signal and the control code added thereto is ciphered in units of $n$ bits to produce a ciphertext when the total number of bits composing the signal to be ciphered is a multiple of $n$, and the random data is added to the ciphertext to produce the data to be transmitted. Therefore, the ciphertext is not easily deciphered.

In the above described third ciphering device or ciphering method in a facsimile, the random data is added behind the signal to be ciphered comprising the coded signal and the control code added thereto and the signal comprising the signal to be ciphered and the random data added thereto is ciphered in units of $n$ bits when the total number of bits composing the signal to be ciphered is a multiple of $n$. Therefore, a ciphertext is not easily deciphered.

A fourth ciphering device in a facsimile according to the present invention is characterized by comprising ciphering means for ciphering a coded signal according to a cipher block chaining system, and initial value changing means for changing an initial value used for ciphering by the ciphering means for each predetermined time period on the basis of data concerning the calendar.

The above described data concerning the calendar includes data representing the year, data representing the month, data representing the day, data representing the time, or data comprising an arbitrary combination thereof. Examples of the above described initial value changing means include one for determining the initial value on the basis of the date and changing the initial value for each day.

In a ciphering method in a facsimile in which a coded signal is ciphered according to a cipher block chaining system, a fourth ciphering method in a facsimile according to the present invention is characterized in that an initial value used for ciphering is changed for each predetermined time period on the basis of data concerning the calendar.

The above described data concerning the calendar includes data representing the year, data representing the month, data representing the day, data representing the time, or data comprising an arbitrary combination thereof. The above described initial value is determined on the basis of, for example, the date, and is changed for each day.

In the above described fourth ciphering device or ciphering method in a facsimile, the coded signal is ciphered according to the cipher block chaining system. The initial value used for ciphering is changed for each predetermined time period on the basis of the data concerning the calendar.

According to the above described fourth ciphering device or ciphering method in a facsimile, the initial value used in the cipher block chaining system can be easily changed, so that a ciphertext is not easily deciphered by a third party.

A fifth ciphering device in a facsimile according to the present invention is characterized by comprising ciphering means for ciphering a coded signal according to a secret key cipher system, and secret key changing means for changing a secret key used for ciphering by the ciphering means for each predetermined time period on the basis of data concerning the calender.

The above described data concerning the calendar includes data representing the year, data representing the month, data representing the day, data representing the time, or data comprising an arbitrary combination thereof. Examples of the above described secret key changing means include one for determining the secret key on the basis of the date and changing the secret key for each day.

In a ciphering method in a facsimile in which a coded signal is ciphered according to a secret key cipher system, a fifth ciphering method in a facsimile according to the present invention is characterized in that a secret key used for ciphering is changed for each predetermined time period on the basis of data concerning the calendar.

The above described data concerning the calendar includes data representing the year, data representing the month, data representing the day, data representing the time, or data comprising an arbitrary combination thereof. The above described secret key is determined on the basis of, for example, the date, and is changed for each day.

In the above described fifth ciphering device or ciphering method in a facsimile, the coded signal is ciphered according to the secret key cipher system. The secret key used for ciphering is changed for each predetermined time period on the basis of the data concerning the calendar.

According to the above described fifth ciphering device or ciphering method in a facsimile, the secret key used in the secret key cipher system can be easily changed, so that a ciphertext is not easily deciphered by a third party.

The foregoing and other objects, features, aspects and advantages of the present invention will become more apparent from the following detailed description of the present invention when taken in conjunction with the accompanying drawings.

BRIEF DESCRIPTION OF THE DRAWINGS

Fig. 1 is a block diagram showing the construction of a CBC mode ciphering device;

Fig. 2 is a block diagram showing the construction of a CBC mode deciphering device;

Fig. 3 is an electrical block diagram showing the schematic construction of a facsimile;

Fig. 4 is a flow chart for explaining operations of the facsimile at the time of transmission;

Fig. 5 is an electrical block diagram showing the schematic construction of another facsimile;

Fig. 6 is a flow chart showing the procedure for ciphering processing performed by a control portion 101;

Fig. 7 is a flow chart showing the procedure for deciphering processing performed by the control portion 101;

Fig. 8 is a timing chart showing the relationship between an initial value used for ciphering in a facsimile on the transmission side and an initial value used in deciphering in a facsimile on the receiving side in a case where the time is around 0:00;

Fig. 9 is an electrical block diagram showing the schematic construction of still another facsimile;

Fig. 10 is a flow chart showing the procedure for ciphering processing performed by a control portion 201;

Fig. 11 is a flow chart showing the procedure for deciphering processing performed by the control portion 201; and

Fig. 12 is a timing chart showing the relationship between key data used for ciphering in a facsimile on the transmission side and key data used for deciphering in a facsimile on the receiving side in a case where the time is around 0:00.

DESCRIPTION OF THE PREFERRED EMBODIMENTS

Referring now to the drawings, embodiments of the present invention will be described.

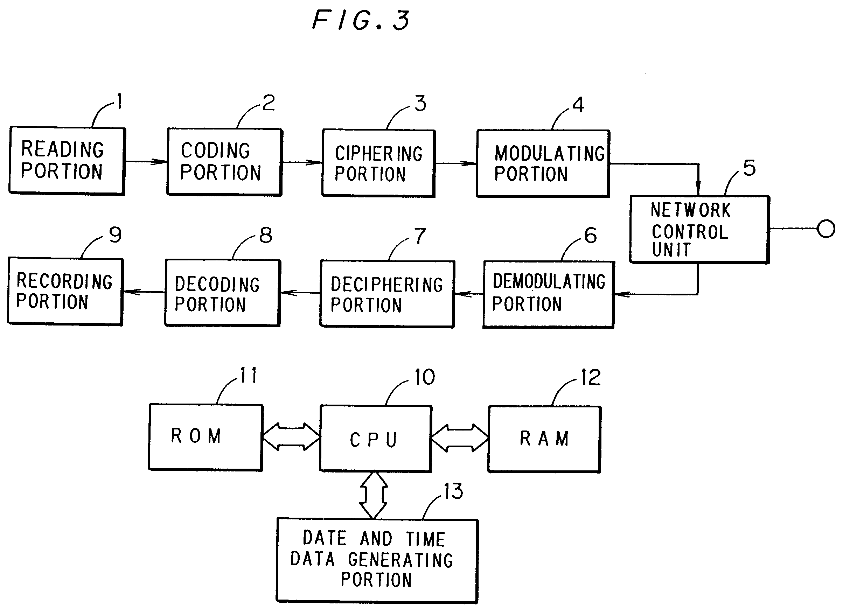

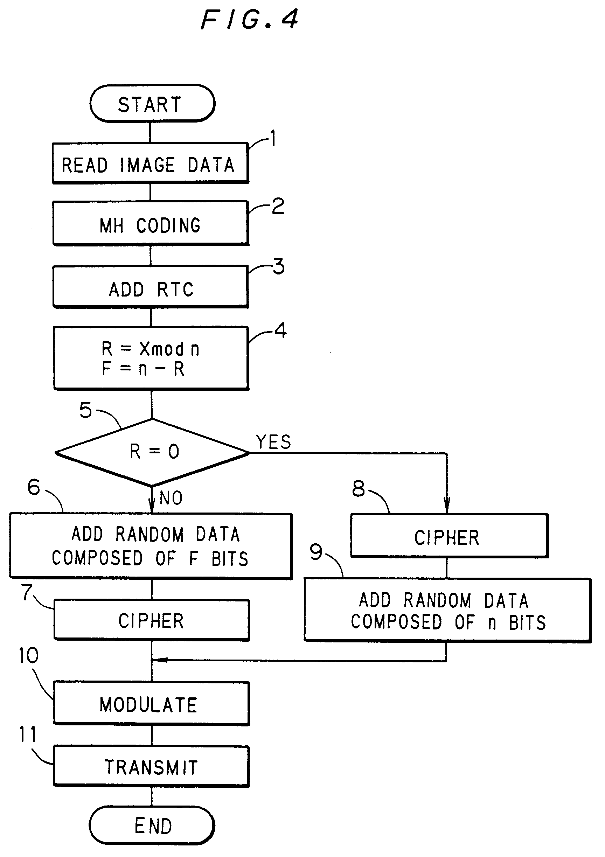

Referring now to Figs. 3 and 4, a first embodiment of the present invention will be described.

Fig. 3 shows the schematic construction of a facsimile.

A facsimile comprises a reading portion 1 for reading an original image, a coding portion 2 for coding image data obtained by the reading, a ciphering portion 3 for ciphering a signal obtained by adding a control code comprising an EOL code, a FILL code and an RTC code to a coded signal in units of n bits to produce a ciphertext, a modulating portion 4 for modulating the ciphertext, a network control unit (NCU) 5 for transmitting an output of the modulating portion 4, a demodulating portion 6 for demodulating a signal received by the network control unit 5, a deciphering portion 7 for deciphering the ciphertext outputted from the demodulating portion 6 to return the same to the coded signal, a decoding portion 8 for decoding the coded signal outputted from the deciphering portion 7, a recoding portion 9 for recording the image data on recording paper on the basis of the decoded signal, and a central processing unit (CPU) 10 for controlling the respective portions.

The CPU 10 comprises a ROM 11 storing its program and the like, a RAM storing necessary data, and a date and time data generating portion 13.

Fig. 4 shows a transmitting operation performed by the facsimile.

First, image data is read from an original by the reading portion 1, and the read data is binary-coded (step 1). The binary-coded data is then subjected to MH coding by the coding portion 2 (step 2). In this case, an EOL code is added behind a coded signal on each scanning line. If the signal transmission time per scanning line is smaller than the minimum time determined by CCITT, a required number of "0" bits are added just ahead of the EOL code. A code added just ahead of the EOL code shall be referred to as a FILL code.

An RTC code is then added behind one telegraphic message (step 3). A remainder $R$ in a case where the total number of bits X composing a signal comprising the coded signal and a control code comprising the EOL code, the FILL code and the RTC code is divided by the number of bits used as a unit for ciphering $n$ is then found. In addition, a difference $F$ between the number of bits used as a unit for ciphering $n$ and the remainder $R$ is found (step 4).

It is then judged whether or not the remainder $R$ is zero (step 5). When the remainder $R$ is not zero, random data corresponding to the number of bits equal to the difference $F$ between the number of bits used as a unit for ciphering $n$ and the remainder $R$ which is found in the step 4 is added behind the RTC code (step 6).

The random data is produced from, for example, date and time data generated from the date and time data generating portion 13. For example, when the date and time is October 23 and 13:46, "10231346" is taken as a decimal number, and the decimal number is binary-coded to produce a binary number composed of 24 bits. Data composed of $F$ bits is taken out of the binary number composed of 24 bits as random data. When $F$ is larger than 24, the binary number is multiplied by m, for example, 2 or 3, to produce a binary number composed of a larger number of bits than $F$, and data composed of $F$ bits is taken out of the produced binary number as random data.

A random number generator may be provided to generate random data. In addition, data used as the random data may be previously stored in the ROM 11.

A signal comprising the coded signal, the control code and the random data composed of $F$ bits which are thus produced is ciphered in units of $n$ bits in the ciphering portion 3, to produce data to be transmitted (step 7). Examples of a ciphering method include a method of calculating exclusive OR of corresponding bits of a signal to be ciphered in units of $n$ bits and n-bit data used for ciphering to produce a ciphertext.

When the remainder $R$ is zero in the foregoing step 5, the signal comprising the coded signal and the control code is ciphered in units of $n$ bits in the ciphering portion 3 (step 8).

In this case, the random data composed of $n$ bits is added to the ciphertext, to produce data to be transmitted (step 9). The data produced from the date and time data, the data generated by the random number generator, the data previously stored in the ROM 11, and the like can be used as the random data.

The data to be transmitted which is produced in the step 7 or 9 is modulated in the modulating portion 4 (step 10) and then, is transmitted through the network control unit 5 (step 11).

The operation performed when ciphered data is received is as follows. Specifically, the signal received by the network control unit 5 is demodulated in the demodulating portion 6 and then, is deciphered in the deciphering portion 7. That is, the received signal is returned to the signal before the ciphering.

If a ciphering method in a facsimile on the transmission side is the above described method of calculating exclusive OR of corresponding bits of a signal to be ciphered in units of $n$ bits and n-bit data used for ciphering to produce a ciphertext, the ciphertext is deciphered using the same data as the data used for ciphering.

Specifically, the signal sent to the deciphering portion 7 is returned to the signal before the ciphering by calculating exclusive OR of the signal sent to the deciphering portion 7 and the data used for ciphering the signal.

Although the signal deciphered by the deciphering portion 7 includes a deciphering signal of the random data composed of $F$ bits which is added in the foregoing step 6 or the random data composed of $n$ bits which is added in the foregoing step 9, the end of one telegraphic message is detected by detecting the RTC code, thereby not to adversely affect a facsimile on the receiving side by the addition of the random data in the foregoing step 6 or 9.

The signal deciphered in the deciphering portion 7 is decoded in the decoding portion 8 and then, is sent to the recording portion 9. The image data is recorded on recording paper by the recording portion 9.

Although in the above described embodiment, the signal comprising the coded signal and the control code is ciphered and then, the random data composed of n bits is added thereto (see steps 8 and 9) when it is judged in the foregoing step 5 that the remainder $R$ is zero, the signal comprising the coded signal and the control code may be ciphered after the random data composed of $n$ bits is added thereto when it is judged that the remainder $R$ is zero.

According to the above described first embodiment, the random data is added to the signal comprising the coded signal and the control code so that the total number of bits $X$ composing the signal comprising the coded signal and the control code is a multiple of the number of bits used as a unit for ciphering $n$ and then, is ciphered when the total number of bits $X$ is not a multiple of $n$. Therefore, the ciphertext is not easily deciphered.

Furthermore, when the total number of bits $X$ composing the signal comprising the coded signal and the control code is a multiple of the number of bits used as a unit for ciphering $n$, the random data composed of $n$ bits is added to the ciphertext and is transmitted. Even when the number of bits used as a unit for ciphering $n$ is smaller than the number of bits (72 bits) composing the RTC code and the total number of bits $X$ composing the signal comprising the coded signal and the control code is a multiple of the number of bits used as a unit for ciphering $n$, therefore, the ciphertext is not easily deciphered.

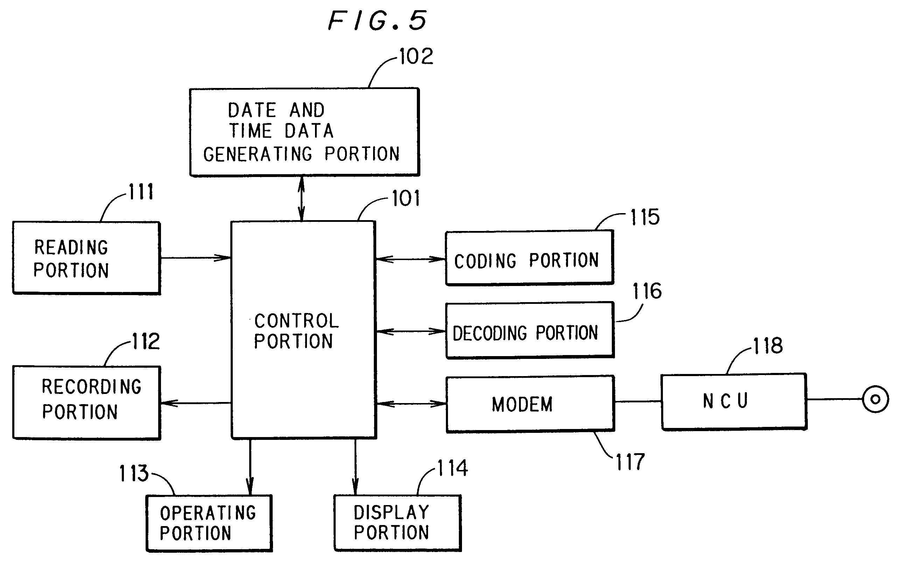

Referring not to Figs. 5 to 8, a second embodiment of the present invention will be described.

Fig. 5 shows the schematic construction of a facsimile.

The facsimile is controlled by a control portion 101 constituted by a microcomputer and the like. The control portion 101 comprises a date and time data generating portion 102 for generating date and time data.

Furthermore, the facsimile comprises as an input-output device of the control portion 101 a reading portion 111, a recording portion 112, an operating portion 113, a display portion 114, a coding portion 115, a decoding portion 116, a modem 117, and the like. The modem 117 is connected to a public telephone line thorough a network control unit (NCU) 118.

The operating portion 113 comprises various operating keys, ten-keys and the like. The contents and the like set by the operating portion 113 are displayed on the display portion 114.

The operation at the time of transmission is as follows. An original image is read by the reading portion 111 and is binary-coded. Binary-coded image data obtained is coded by the coding portion 115. A coded signal obtained is ciphered according to a cipher block chaining system (hereinafter referred to as a CBC mode) by the control portion 101.

A ciphertext produced by the control portion 101 is modulated by the modem 117. The ciphertext is sent to the public telephone line through the NCU 118, and is sent to a facsimile on the receiving side. CBC mode ciphering processing is performed on the basis of equations (1) and (2) already described:

$$C_1 = Ek (M_1 \oplus IV) \quad (1)$$

$$C_i = Ek (M_i \oplus C_{i-1} (i = 2, 3, ...)) \quad (2)$$

The operation at the time of receiving is as follows. If received data is sent to the NCU 118, the received data is demodulated by the modem 117. The data demodulated by the modem 117, that is, a ciphertext is deciphered according to the CBC mode by the control portion 101, to be returned to a plaintext.

The plaintext obtained by the control portion 101 is decoded by the decoding portion 116. Image data obtained by the decoding is recorded on recording paper by the recording portion 112. CBC mode deciphering processing is performed on the basis of equations (3) and (4) already described:

$$M_1 = Dk (C_1) \oplus IV \quad (3)$$

$$M_i = Dk (C_i) \oplus C_{i-1} (i = 2, 3, ...) \quad (4)$$

In the present embodiment, an initial value IV used for the CBC mode ciphering (see the foregoing equations (1) and (3)) is produced on the basis of the date, and is updated for each day. However, there may, in some cases, be a difference in time set between a facsimile on the transmission side and a facsimile on the receiving side.

It is assumed herein that the time difference is within 30 minutes. If the time difference set between the facsimile on the transmission side and the facsimile on the receiving side is within 30 minutes, it is possible to prevent the impossibility of deciphering in the facsimile on the receiving side by the time difference therebetween.

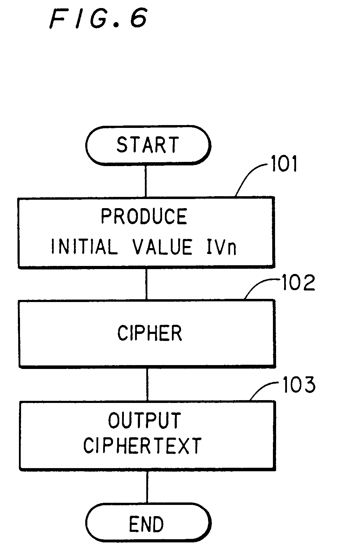

Fig. 6 shows the procedure for ciphering processing performed by the control portion 101.

At the time of producing a ciphertext, an initial value IVn is produced on the basis of date data generated from the date and time data generating portion 102 (step 101).

The initial value IVn is found on the basis of the following equation (5) if the Christian era is taken as 4-digit data $\underline{A}$, the month is taken as 2-digit data $\underline{B}$, and the day is taken as 2-digit data $\underline{C}$:

$$IVn = 10000A + 100B + C \quad (5)$$

For example, when the date of today is January 11, 1993, the initial value IVn is "19930111".

Coded data is then ciphered on the basis of the foregoing equations (1) and (2) (step 102). In this case, the initial value IVn found in the foregoing step 101 is used as an initial value IV. A ciphertext obtained by the ciphering is sent to the modem 117 (step 103).

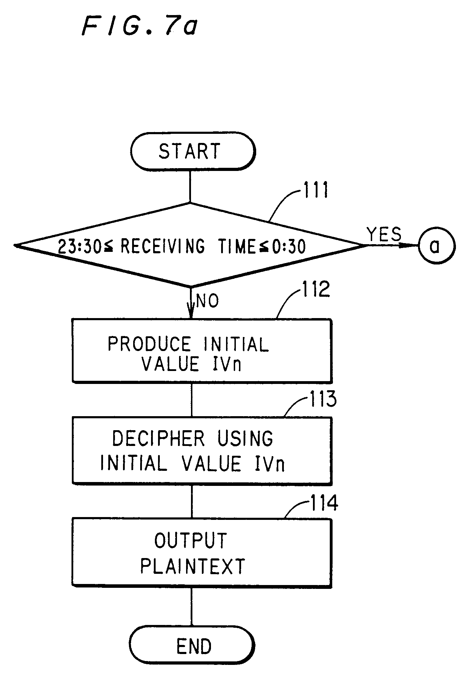

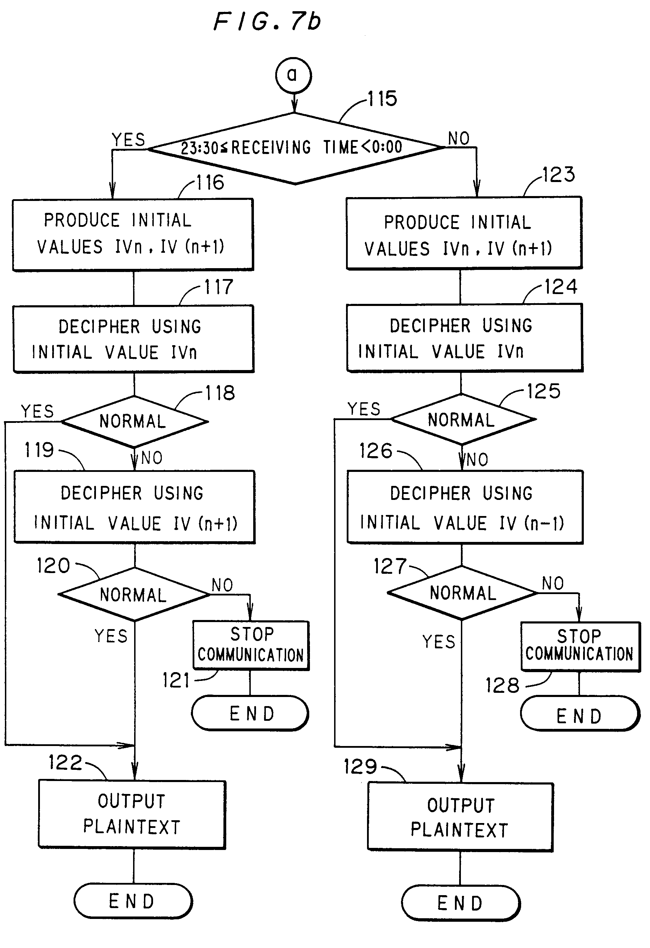

Fig. 7 shows the procedure for deciphering processing performed by the control portion 101.

It is first judged on the basis of time data generated from the date and time data generating portion 102 whether or not the receiving time is time from 23:30 to 0:30 (23:30 ≤ receiving time ≤ 0:30) (step 111).

When the receiving time is not the time from 23:30 to 0:30, an initial value IVn is produced on the basis of data representing the date of today which is generated from the date and time data generating portion 102 (step 112). This initial value IVn is produced on the basis of the foregoing equation (5).

A ciphertext after demodulation is then deciphered on the basis of the foregoing equations (3) and (4) (step 113). In this case, the initial value IVn found in the foregoing step 112, that is, the initial value IVn produced from the data representing the date of today is used as an initial value IV. A plaintext after the deciphering is sent to the decoding portion 116 (step 114).

When the receiving time is the time from 23:30 to 0:30, it is judged whether the receiving time is time from 23:30 to 0:00 (23:30 ≤ receiving time ≤ 0:00) or time from 0:00 to 0:30 (0:00 ≤ receiving time ≤ 0:30) (step 115).

When the receiving time is the time from 23:00 to 0:00, the initial value IVn is produced on the basis of the data representing the date of today which is generated from the date and time data generating portion 102, and an initial value IV (n + 1) is produced on the basis of data representing the date of the next day (step 116).

A method of producing an initial value is the same as the method represented by the foregoing equation (5). Therefore, when the date of today is January 11, 1993, for example, the initial value IVn is "19930111" and the initial value IV (n + 1) is "19930112".

The ciphertext is then deciphered on the basis of the foregoing equations (3) and (4) by setting the initial value IV to IVn (step 117). It is judged on the basis of the results of the deciphering whether or not the ciphertext is normally deciphered (step 118).

In the case of coding in the coding portion 115, a 12-bit EOL code "000000000001" is added behind a coded signal on each scanning line. In addition, the number of pixels constituting each line is a predetermined number. It can be judged whether or not the ciphertext is normally deciphered by, for example, finding the first EOL code from data after the deciphering, decoding data to the EOL code and judging whether or not the number of bits after the decoding is a predetermined number.

If it is judged that the ciphertext is normally deciphered, a plaintext after the deciphering is sent to the decoding portion 116 (step 122). On the other hand, if it is judged that the ciphertext is not normally deciphered, the ciphertext is deciphered on the basis of the foregoing equations (3) and (4) by setting the initial value IV to IV (n + 1) (step 119). It is judged on the basis of the results of the deciphering whether or not the ciphertext is normally deciphered (step 120).

If it is judged that the ciphertext is normally deciphered, the plaintext after the deciphering is sent to the decoding portion 116 (step 122). On the other hand, if it is judged that the ciphertext is not normally deciphered, communication is stopped as a deciphering error (step 121).

When in the foregoing step 115, the receiving time is the time from 0:00 to 0:30, the initial value IVn is produced on the basis of the data representing the date of today which is generated from the date and time data generating portion 102, and an initial value IV (n - 1) is produced on the basis of data representing the date of the preceding day (step 123).

A method of producing key data is the same as the method represented by the foregoing equation (5). Therefore, when the date of today is January 12, 1993, for example, the initial value IVn is "19930112" and the initial value IV (n - 1) is "1993011".

The ciphertext is then deciphered on the basis of the foregoing equation (2) by setting the initial value IV to IVn (step 124). It is judged on the basis of the results of the deciphering whether or not the ciphertext is normally deciphered (step 125).

If it is judged that the ciphertext is normally deciphered, a plaintext after the deciphering is sent to the decoding portion 116 (step 129). On the other hand, if it is judged that the ciphertext is not normally deciphered, the ciphertext is deciphered on the basis of the foregoing equation (2) by setting the initial value IV to IV (n - 1) (step 126). It is judged on the basis of the results of the deciphering whether or not the ciphertext is normally deciphered (step 127).

If it is judged that the ciphertext is normally deciphered, the plaintext after the deciphering is sent to the decoding portion 116 (step 129). On the other hand, if it is judged that the ciphertext is not normally deciphered, communication is stopped as a deciphering error (step 128).

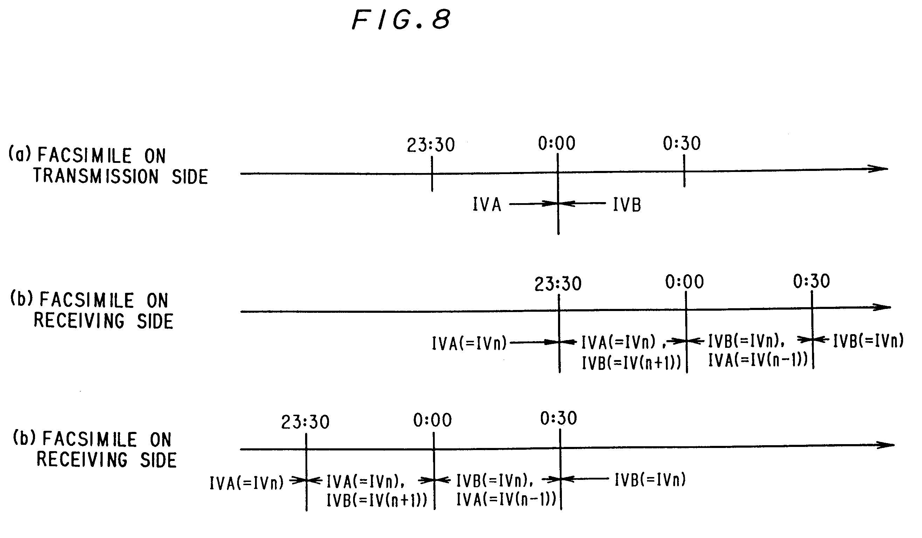

Fig. 8 shows the relationship between an initial value used for ciphering in the facsimile on the transmission side and an initial value used for deciphering in the facsimile on the receiving side in a case where the time is around 0:00.

Fig. 8 (a) shows an initial value used for ciphering against the time set in the facsimile on the transmission side. The initial value used for ciphering is switched from an initial value IVA corresponding to the date A of one day to an initial value IVB corresponding to the date B of the next day utilizing the time 0:00 as a boundary.

Fig. 8 (b) shows a case where the time set in the facsimile on the receiving side is 30 minutes later than the time set in the facsimile on the transmission side. In this case, even if the receiving time in the facsimile on the receiving side is time from 23:30 to 0:00, the transmission time in the facsimile on the transmission side is time from 0:00 to 0:30. Accordingly, an initial value IV used for ciphering is IVB.

If the receiving time is the time from 23:00 to 0:00, the initial values IVn and IV (n + 1) are produced in the facsimile on the receiving side (see steps 115 and 116 in Fig. 7). That is, IVA (= IVn) and IVB (= IV (n + 1)) are produced.

Consequently, it is judged that the results of deciphering using the initial value IVA are not normal, and it is judged that the results of deciphering using the initial value IVB are normal, so that the results of deciphering using IVB is sent to the decoding portion 116. Fig. 8 (c) shows a case where the time set in the facsimile on the receiving side is 30 minutes earlier than the time set in the facsimile on the transmission side. In this case, even if the receiving time in the facsimile on the receiving side is time from 0:00 to 0:30, the transmission time in the facsimile on the transmission side is time from 23:00 to 0:00. Accordingly, an initial value used for ciphering is IVA.

If the receiving time is the time from 0:00 to 0:30, the initial values IVn and IV (n - 1) are produced in the facsimile on the receiving side (see steps 115 and 123 in Fig. 7). That is, IVB (= IVn) and IVA (= IV (n - 1)) are produced. Consequently, it is judged that the results of deciphering using IVB are not normal, and it is judged that the results of deciphering using IVA are normal, so that the results of deciphering using IVA are sent to the decoding portion 116.

As described in the foregoing, according to the second embodiment, the initial value used for ciphering is changed in days, thereby to make it difficult for a third party to decipher the ciphertext. In addition, the initial value used for ciphering is determined on the basis of the date, thereby to make it possible to grasp the initial value used for ciphering even in the facsimile on the receiving side. Even if the initial value used for ciphering is changed in days, therefore, it is possible to decipher the ciphertext in the facsimile on the receiving side.

Furthermore, even if there is a difference in time between the facsimile on the transmission side and the facsimile on the receiving side, it is possible to normally decipher the ciphertext in the facsimile on the receiving side within a predetermined allowable difference range.

In facsimile communication between areas which differ in time, the time set in the facsimile on the receiving side is corrected on the basis of the time difference, thereby to make it possible to decipher the ciphertext as in the above described embodiment.

Month data can be used as the initial value IV, to also change the initial value for each month. In addition, time data can be also used as the initial value IV, to also change the initial value for each hour. That is, the initial value IV can be produced on the basis of the year data, the month data, the day data, the time data or data comprising an arbitrary combination thereof.

Furthermore, the initial value IV may be produced on the basis of a predetermined function utilizing as variables the year data, the month data, the day data, the time data or the data comprising an arbitrary combination thereof.

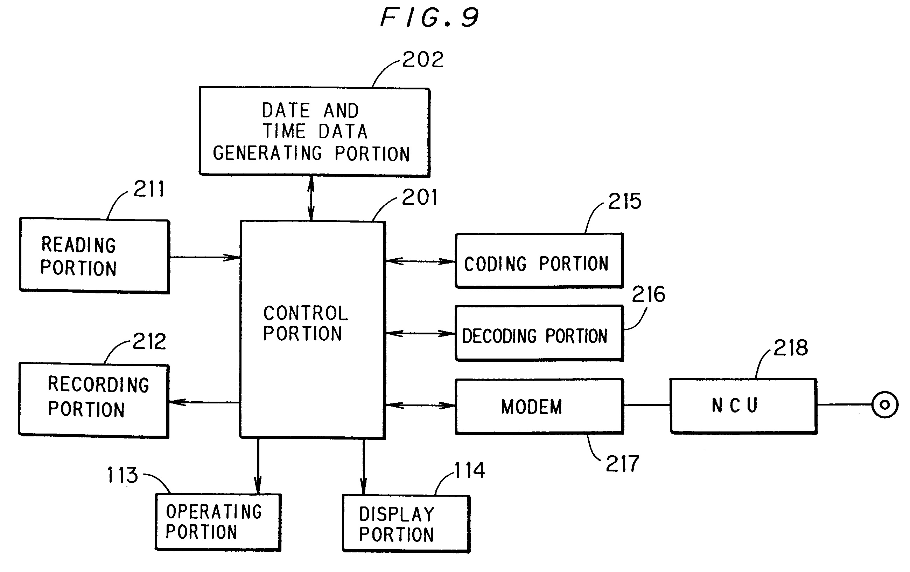

Referring now to Figs. 9 to 12, description is made of a third embodiment of the present invention.

Fig. 9 shows the schematic construction of a facsimile.

The facsimile is controlled by a control portion 201 constituted by a microcomputer and the like. The control portion 201 comprises a date and time data generating portion 202 for generating date and time data.

Furthermore, the facsimile comprises as an input-output device of the control portion 201 a reading portion 211, a recording portion 212, an operating portion 213, a display portion 214, a coding portion 215, a decoding portion 216, a modem 217, and the like. The modem 217 is connected to a public telephone line thorough a network control unit (NCU) 218.

The operating portion 213 comprises various operating keys, ten-keys and the like. The contents and the like set by the operating portion 213 are displayed on the display portion 214.

The operation at the time of transmission is as follows. An original image is read by the reading portion 211 and is binary-coded. Binary-coded image data obtained is coded by the coding portion 215. A coded signal obtained is ciphered according to a secret key cipher system by the control portion 201.

A ciphertext produced by the control portion 201 is modulated by the modem 217. The ciphertext is sent to the public telephone line through the NCU 218, and is sent to a facsimile on the receiving side.

One simple example of a cipher rule used by the control portion 201 is such a rule that if plaintext data is taken as $\underline{x}$, ciphertext data is taken as $\underline{y}$, and cryptographic key data (key data) is taken as $\underline{K}$, $\underline{y}$ is a function of $(x + K)$, i.e., $\{y = F (x + K)\}$.

The operation at the time of receiving is as follows. If received data is sent to the NCU 218, the received data is demodulated by the modem 217. The data demodulated by the modem 217, that is, the ciphertext is deciphered according to the secret key cipher system by the control portion 201, to be returned to a plaintext.

The plaintext obtained by the control portion 201 is decoded by the decoding portion 216. Image data obtained by the decoding is recorded on recording paper by the recording portion 212.

In the present embodiment, key data used for the ciphering is produced on the basis of the date, and is updated for each day. However, there may, in some cases, be a difference in time set between a facsimile on the transmission side and a facsimile on the receiving side. It is assumed herein that the time difference is within 30 minutes.

If the time difference set between the facsimile on the transmission side and the facsimile on the receiving side is within 30 minutes, it is possible to prevent the impossibility of deciphering in the facsimile on the receiving side by the time difference therebetween.

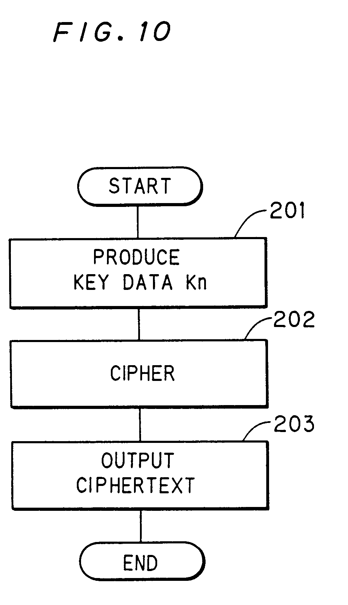

Fig. 10 shows the procedure for ciphering processing performed by the control portion 201.

At the time of producing a ciphertext, key data Kn is produced on the basis of date data generated from the date and time data generating portion 202 (step 201).

The key data Kn is found on the basis of the following equation (6) if the Christian era is taken as 4-digit data $A$, the month is taken as 2-digit data $B$, and the day is taken as 2-digit data $C$:

$$Kn = 10000A + 100B + C \qquad (6)$$

For example, when the date of today is January 11, 1993, the key data Kn is "19930111".

Coded data is then ciphered using the key data Kn (step 202). A ciphertext obtained by the ciphering is sent to the modem 17 (step 203).

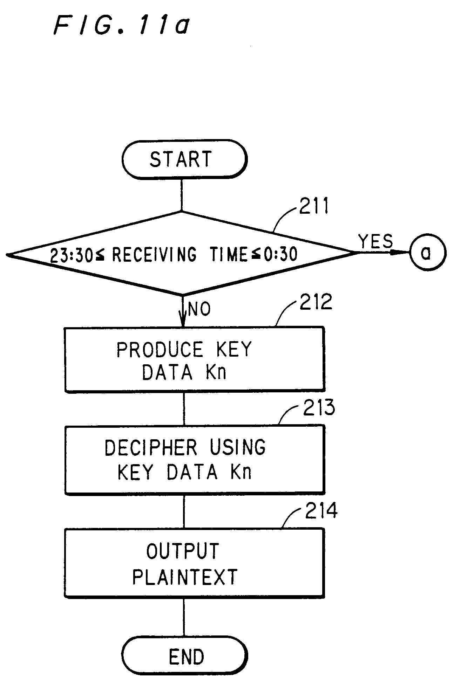

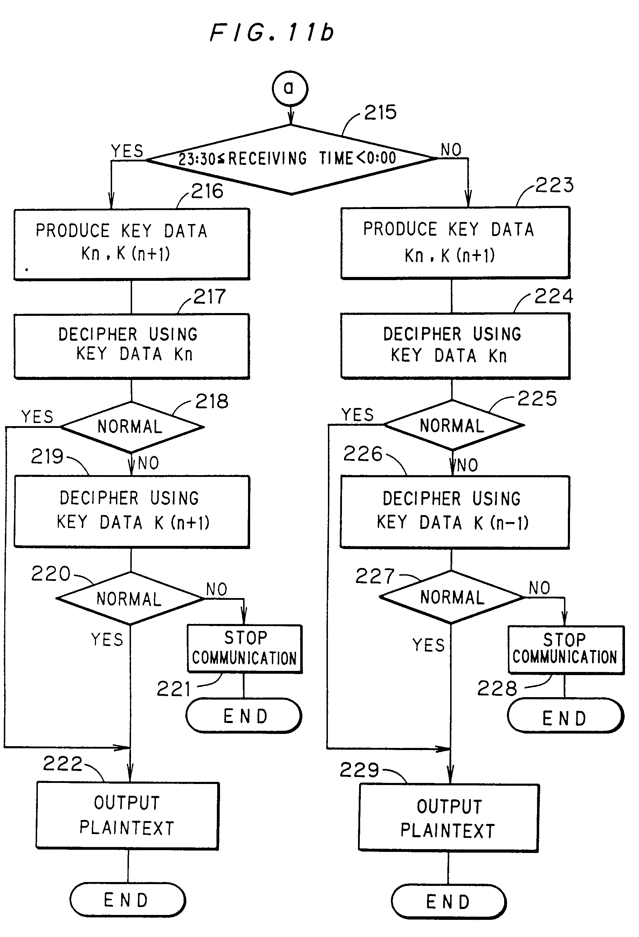

Fig. 11 shows the procedure for deciphering processing performed by the control portion 201.

It is first judged on the basis of time data generated from the date and time data generating portion 102 whether or not the receiving time is time from 23:30 to 0:30 (23:30 ≦ receiving time ≦ 0:30) (step 211).

When the receiving time is not the time from 23:30 to 0:30, key data Kn is produced on the basis of data representing the date of today which is generated from the date and time data generating portion 202 (step 212). This key data Kn is produced on the basis of the foregoing equation (6).

A ciphertext after demodulation is then deciphered using the key data Kn produced from the data representing the date of today (step 213). A plaintext after the deciphering is sent to the decoding portion 216 (step 214).

When the receiving time is the time from 23:30 to 0:30, it is judged whether the receiving time is time from 23:30 to 0:00 (23:30 ≦ receiving time ≦ 0.00) or time from 0:00 to 0:30 (0:00 ≦ receiving time ≦ 0:30) (step 215).

When the receiving time is the time from 23:00 to 0:00, the key data Kn is produced on the basis of the data representing the date of today which is generated from the date and time data generating portion 202, and key data $K (n + 1)$ is produced on the basis of data representing the date of the next day (step 216).

A method of producing key data is the same as the method represented by the foregoing equation (6). Therefore, when the date of today is January 11, 1993, for example, the key data Kn is "19930111" and the key data $K (n + 1)$ is "19930112".

The ciphertext is then deciphered using the key data Kn (step 217). It is judged on the basis of the results of the deciphering whether or not the ciphertext is normally deciphered (step 218).

In the case of coding in the coding portion 215, a 12-bit EOL code "000000000001" is added behind a coded signal on each scanning line. In addition, the number of pixels constituting each line is a predetermined number. It can be judged whether or not the ciphertext is normally deciphered by, for example, finding the first EOL code from data after the deciphering, decoding data to the EOL code and judging whether or not the number of bits after the decoding is a predetermined number.

If it is judged that the ciphertext is normally deciphered, a plaintext after the deciphering is sent to the decoding portion 216 (step 222). On the other hand, if it is judged that the ciphertext is not normally deciphered, the ciphertext is deciphered using the key data $K (n + 1)$ (step 219). It is judged on the basis of the results of the deciphering whether or not the ciphertext is normally deciphered (step 220).

If it is judged that the ciphertext is normally deciphered, the plaintext after the deciphering is sent to the decoding portion 216 (step 222). On the other hand, if it is judged that the ciphertext is not normally deciphered, communication is stopped as a deciphering error (step 221).

When in the foregoing step 215, the receiving time is the time from 0:00 to 0:30, the key data Kn is produced on the basis of the data representing the date of today which is generated from the date and time data generating portion 202, and key data $K (n - 1)$ is produced on the basis of data representing the date of the preceding day (step 223).

A method of producing key data is the same as the method represented by the foregoing equation (6). Therefore, when the date of today is January 12, 1993, for example, the key data Kn is "19930112" and the key data $K (n - 1)$ is "19930111".

The ciphertext is then deciphered using the key data Kn (step 224). It is judged on the basis of the results of the deciphering whether or not the ciphertext is normally deciphered (step 225).

If it is judged that the ciphertext is normally deciphered, a plaintext after the deciphering is sent to the decoding portion 216 (step 229). On the other hand, if it is judged that the ciphertext is not normally deciphered, the ciphertext is deciphered using the key data $K (n - 1)$ (step 226). It is judged on the basis of the results of the deciphering whether or not the ciphertext is normally deciphered (step 227).

If it is judged that the ciphertext is normally deciphered, the plaintext after the deciphering is sent to the decoding portion 216 (step 229). On the other hand, if it is judged that the ciphertext is not normally deciphered, communication is stopped as a deciphering error (step 228).

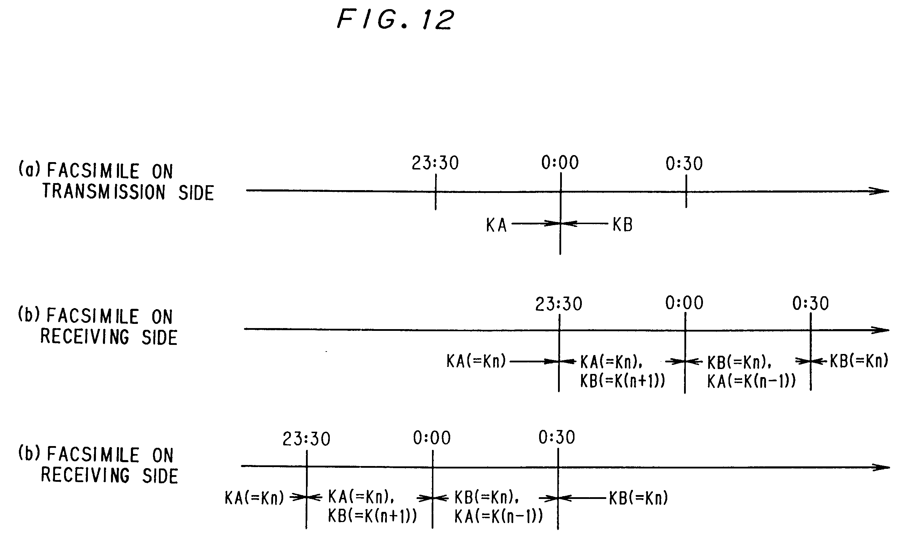

Fig. 12 shows the relationship between key data used for ciphering in the facsimile on the transmission side and key data used for deciphering in the facsimile on the receiving side in a case where the time is around 0:00.

Fig. 12 (a) shows key data used for ciphering against the time set in the facsimile on the transmission side. The key data used for ciphering is switched from key date KA corresponding to the date A of one day to key data KB corresponding to the date B of the next day utilizing the time 0:00 as a boundary.

Fig. 12 (b) shows a case where the time set in the facsimile on the receiving side is 30 minutes later than the time set in the facsimile on the transmission side. In this case, even if the receiving time in the facsimile on the receiving side is time from 23:30 to 0:00, the transmission time in the facsimile on the transmission side is time from 0:00 to 0:30. Accordingly, the key data used for ciphering is KB.

If the receiving time is the time from 23:00 to 0:00, the key data $Kn$ and $K (n + 1)$ are produced in the facsimile on the receiving side (see steps 215 and 216 in Fig. 11). That is, KA (= $Kn$) and KB (= $K (n + 1)$) are produced. Consequently, it is judged that the results of deciphering using the key data KA are not normal, and it is judged that the results of deciphering using the key data KB are normal, so that the results of deciphering using KB is sent to the decoding portion 216.

Fig. 12 (c) shows a case where the time set in the facsimile on the receiving side is 30 minutes earlier than the time set in the facsimile on the transmission side. In this case, even if the receiving time in the facsimile on the receiving side is time from 0:00 to 0:30, the transmission time in the facsimile on the transmission side is time from 23:00 to 0:00. Accordingly, the key data used for ciphering is KA.

If the receiving time is the time from 0:00 to 0.30, the key data $Kn$ and $K (n - 1)$ are produced in the facsimile on the receiving side (see steps 215 and 223 in Fig. 11). That is, KB (= $Kn$) and KA (= $K (n - 1)$) are produced. Consequently, it is judged that the results of deciphering using KB are not normal, and it is judged that the results of deciphering using KA are normal, so that the results of deciphering using KA are sent to the decoding portion 216.

As described in the foregoing, according to the third embodiment, the key data used for ciphering is changed in days, thereby to make it difficult for a third party to decipher the ciphertext. In addition, the key data used for ciphering is determined on the basis of the date, thereby to make it possible to grasp the key data used for ciphering even in the facsimile on the receiving side. Even if the key data used for ciphering is changed in days, therefore, it is possible to decipher the ciphertext in the facsimile on the receiving side.

Furthermore, even if there is a difference in time between the facsimile on the transmission side and the facsimile on the receiving side, it is possible to normally decipher the ciphertext in the facsimile on the receiving side within a predetermined allowable difference range.

In facsimile communication between areas which differ in time, the time set in the facsimile on the receiving side is corrected on the basis of the time difference, thereby to make it possible to decipher the ciphertext as in the above described embodiment.

Month data can be used as the key data, to also change the key data for each month. In addition, time data can be used as the key data, to also change the key data for each hour. That is, the key data can be produced on the basis of the year data, the month data, the day data, the time data or data comprising an arbitrary combination thereof.

Furthermore, the key data may be produced on the basis of a predetermined function utilizing as variables the year data, the month data, the day data, the time data or the data comprising an arbitrary combination thereof.

Although the present invention has been described and illustrated in detail, it is clearly understood that the same is by way of illustration and example only and is not to be taken by way of limitation.

## Claims

1.  A ciphering device in a facsimile apparatus in which a signal to be ciphered comprising a coded signal and a control code added thereto is ciphered in units of $n$ bits, comprising:
    - means for judging whether or not the total number of bits composing the signal to be ciphered is a multiple of $n$; and
    - means for adding random data behind the signal to be ciphered so that the total number of bits composing the signal to be ciphered is a multiple of $n$ and ciphering a signal comprising the signal to be ciphered and the random data added thereto in units of $n$ bits when the total number of bits is not a multiple of $n$.

2. The ciphering device according to claim 1, wherein the control code comprises an end-of-line code added behind the coded signal on each scanning line, a FILL code added just ahead of the end-of-line code if the signal transmission time per scanning line is smaller than predetermined time, and a return-to-control code added behind one telegraphic message.

3. The ciphering device according to claim 1 or 2, wherein the random data is produced on the basis of date and time data.

4. A ciphering device in a facsimile apparatus in which a signal to be ciphered comprising a coded signal and a control code added thereto is ciphered in units of $n$ bits, comprising:
   - means for judging whether or not the total number of bits composing the signal to be ciphered is a multiple of $n$,
   - means for ciphering the signal to be ciphered in units of $n$ bits to produce a ciphertext when the total number of bits composing the signal to be ciphered is a multiple of $n$, and
   - means for adding random data to the ciphertext to produce data to be transmitted.

5. A ciphering device in a facsimile apparatus in which a signal to be ciphered comprising a coded signal and a control code added thereto is ciphered in units of $n$ bits, comprising:
   - means for judging whether or not the total number of bits composing the signal to be ciphered is a multiple of $n$; and
   - means for adding random data behind the signal to be ciphered and ciphering a signal comprising the signal to be ciphered and the random data added thereto in units of $n$ bits when the total number of bits composing the signal to be ciphered is a multiple of $n$.

6. The ciphering device according to claim 4 or 5, wherein the control code comprises an end-of-line code added behind the coded signal on each scanning line, a FILL code added just ahead of the end-of-line code if the signal transmission time per scanning line is smaller than a predetermined time, and a return-to-control code added behind one telegraphic message.

7. The ciphering device according to claim 4 or 5, wherein the random data is produced on the basis of date and time data.

8. A ciphering device in a facsimile comprising:
   - ciphering means for ciphering a coded signal according to a cipher block chaining system; and
   - initial value changing means for changing an initial value used for ciphering by the ciphering means for each predetermined time period on the basis of data concerning the calendar.

9. The ciphering device according to claim 8, wherein the initial value changing means determines the initial value on the basis of the date and changes the initial value for each day.

10. A ciphering device in a facsimile apparatus comprising:
   - ciphering means for ciphering a coded signal according to a secret key cipher system; and
   - secret key changing means for changing a secret key used for ciphering by the ciphering means for each predetermined time period on the basis of data concerning the calendar.

11. The ciphering device according to claim 10, wherein the secret key changing means determines the secret key on the basis of the date and changes the secret key for each day.

12. A ciphering method in a facsimile apparatus in which a signal to be ciphered comprising a coded signal and a control code added thereto is ciphered in units of $n$ bits, comprising the step of
   - adding random data behind the signal to be ciphered so that the total number of bits composing the signal to be ciphered is a multiple of $n$ and ciphering a signal comprising the signal to be ciphered and the random data added thereto in units of $n$ bits when the total number of bits is not a multiple of $n$.

13. The ciphering method according to claim 12, wherein the control code comprises an end-of-line code added behind the coded signal on each scanning line, a FILL code added just ahead of the end-of-line code if the signal transmission time per scanning line is smaller than a predetermined time, and a return-to-control code added behind one telegraphic message.

**14.** The ciphering method according to claim 12 or 13,
wherein the random data is produced on the basis of date and time data.

**15.** A ciphering method in a facsimile in which a signal to be ciphered comprising a coded signal and a control code added thereto is ciphered in units of $n$ bits,
comprising the steps of:
- ciphering the signal to be ciphered in units of n bits to produce a ciphertext when the total number of bits composing the signal to be ciphered is a multiple of n; and
- adding random data to the ciphertext to produce data to be transmitted.

**16.** A ciphering method in a facsimile in which a signal to be ciphered comprising a coded signal and a control code added thereto is ciphered in units of $n$ bits,
comprising the step of:
- adding random data behind the signal to be ciphered and ciphering a signal comprising the signal to be ciphered and the random data added thereto in units of $n$ bits when the total number of bits composing the signal to be ciphered is a multiple of $n$.

**17.** The ciphering method according to claim 15 or 16,
wherein the control code comprises an end-of-line code added behind the coded signal on each scanning line, a FILL code added just ahead of the end-of-line code if the signal transmission time per scanning line is smaller than predetermined time, and a return-to-control code added behind one telegraphic message.

**18.** The ciphering method according to any of claims 15 to 17,
wherein the random data is produced on the basis of date and time data.

**19.** A ciphering method in a facsimile in which a coded signal is ciphered according to a cipher block chaining system, wherein
an initial value used for ciphering is changed for each predetermined time period on the basis of data concerning the calendar.

**20.** The ciphering method according to claim 19,
wherein the initial value is determined on the basis of the date, and is changed for each day.

**21.** A ciphering method in a facsimile in which a coded signal is ciphered according to a secret key cipher system,
wherein a secret key used for ciphering is changed for each predetermined time period on the basis of data concerning the calendar.

**22.** The ciphering method according to claim 21,
wherein the secret key is determined on the basis of the date, and is changed for each day.

# F I G. 1

# $F I G . 2$

# FIG. 3

READING PORTION (1) → CODING PORTION (2) → CIPHERING PORTION (3) → MODULATING PORTION (4) → NETWORK CONTROL UNIT (5) → ○

RECORDING PORTION (9) ← DECODING PORTION (8) ← DECIPHERING PORTION (7) ← DEMODULATING PORTION (6)

ROM (11) ⟷ CPU (10) ⟷ RAM (12)

CPU (10) ⟷ DATE AND TIME DATA GENERATING PORTION (13)

EP 0 625 845 A1

# F I G . 4

START

1 — READ IMAGE DATA

2 — MH CODING

3 — ADD RTC

4 — $R = X \bmod n$
$F = n - R$

5 — $R = 0$ — YES

NO

6 — ADD RANDOM DATA COMPOSED OF F BITS

8 — CIPHER

7 — CIPHER

9 — ADD RANDOM DATA COMPOSED OF n BITS

10 — MODULATE

11 — TRANSMIT

END

## FIG. 5

DATE AND TIME DATA GENERATING PORTION — 102

READING PORTION — 111

CONTROL PORTION — 101

CODING PORTION — 115

DECODING PORTION — 116

RECORDING PORTION — 112

MODEM — 117

NCU — 118

OPERATING PORTION — 113

DISPLAY PORTION — 114

EP 0 625 845 A1

# FIG.6

```
        ╭─────────────╮
        │    START    │
        ╰─────────────╯
               │              ╭─101
      ┌────────────────────┐ ╱
      │      PRODUCE       │
      │ INITIAL VALUE IVn  │
      └────────────────────┘
               │              ╭─102
      ┌────────────────────┐ ╱
      │       CIPHER       │
      └────────────────────┘
               │              ╭─103
      ┌────────────────────┐ ╱
      │      OUTPUT        │
      │    CIPHERTEXT      │
      └────────────────────┘
               │
        ╭─────────────╮
        │     END     │
        ╰─────────────╯
```

# F I G. 7a

# F I G. 7b

# FIG.8

**(a) FACSIMILE ON TRANSMISSION SIDE**

23:30　　　0:00　　　0:30

IVA ——→ ←—— IVB

**(b) FACSIMILE ON RECEIVING SIDE**

23:30　　　0:00　　　0:30

IVA(=IVn) ——→ ←— IVA(=IVn), ←— IVB(=IVn), ←— IVB(=IVn)
IVB(=IV(n+1))　IVA(=IV(n-1))

**(b) FACSIMILE ON RECEIVING SIDE**

23:30　　　0:00　　　0:30

IVA(=IVn) →←— IVA(=IVn), →←— IVB(=IVn), →←—— IVB(=IVn)
IVB(=IV(n+1))　IVA(=IV(n-1))

# FIG.9

EP 0 625 845 A1

## FIG. 10

```
          ┌─────────────┐
          │    START    │
          └──────┬──────┘
                 │              ╱201
    ┌────────────┴────────────┐
    │        PRODUCE          │
    │      KEY DATA Kn        │
    └────────────┬────────────┘
                 │              ╱202
    ┌────────────┴────────────┐
    │         CIPHER          │
    └────────────┬────────────┘
                 │              ╱203
    ┌────────────┴────────────┐
    │        OUTPUT           │
    │      CIPHERTEXT         │
    └────────────┬────────────┘
                 │
          ┌──────┴──────┐
          │     END     │
          └─────────────┘
```

# F I G. 1 1 a

START

211

23:30≤ RECEIVING TIME≤0:30 — YES → (a)

NO

212

PRODUCE KEY
DATA Kn

213

DECIPHER USING
KEY DATA Kn

214

OUTPUT
PLAINTEXT

END

# FIG. 11b

# FIG. 12

EP 0 625 845 A1

(a) FACSIMILE ON
TRANSMISSION SIDE

23:30      0:00      0:30

KA ———→ ←——— KB

(b) FACSIMILE ON
RECEIVING SIDE

23:30      0:00      0:30

$KA(=Kn)$ ————→ ←— $KA(=Kn)$, $KB(=K(n+1))$ ——→ ←— $KB(=Kn)$, $KA(=K(n-1))$ ——→ ←— $KB(=Kn)$

(b) FACSIMILE ON
RECEIVING SIDE

23:30      0:00      0:30

$KA(=Kn)$ →← $KA(=Kn)$, $KB(=K(n+1))$ →← $KB(=Kn)$, $KA(=K(n-1))$ →← ——— $KB(=Kn)$

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| A | COMPUTERS & SECURITY, vol.10, no.1, February 1991, OXFORD GB pages 37 - 40, XP000209186 MITCHELL AND VARADHARAJAN 'Modified Forms of Cipher Block Chaining' * page 37, left column, paragraph 2 - right column, last paragraph * | 1,4,5,8, 12,15, 16,19 | H04N1/44 H04L9/06 |
| A | DE-A-31 28 414 (RICOH) <br><br> * abstract * | 2,6,13, 17 | |
| A | PATENT ABSTRACTS OF JAPAN vol. 12, no. 162 (E-609) 17 May 1988 & JP-A-62 272 752 (MATSUSHITA GRAPHIC COMMUNICATION) 26 November 1987 * abstract * | 2,6,13, 17 | |
| A | FR-A-2 439 444 (LAPEYRONNIE) <br><br> * page 4, line 36 - line 40 * | 3,7,14, 18 | TECHNICAL FIELDS SEARCHED (Int.Cl.5) |
| P,A | PATENT ABSTRACTS OF JAPAN vol. 18, no. 105 (E-1512) 21 February 1994 & JP-A-05 304 614 (NED CORP) 16 November 1993 * abstract * | 3,7,14, 18 | H04N H04L |

The present search report has been drawn up for all claims

| Place of search | Date of completion of the search | Examiner |
|---|---|---|
| THE HAGUE | 10 August 1994 | Isa, S |

EPO FORM 1503 03.82 (P04C01)